# EUROPÄISCHE PATENTSCHRIFT

(11) **EP 2 847 393 B1**
(45) Veröffentlichungstag und Bekanntmachung des Hinweises auf die Patenterteilung: **15.04.2020**
(21) Anmeldenummer: 12719732.5
(22) Anmeldetag: 10.05.2012
(51) Int. Cl.: E03C 1/322, E03D 11/14

(54) **BEFESTIGUNGSSYSTEM FÜR WANDMONTAGE**
FASTENING SYSTEM FOR WALL MOUNTING
SYSTÈME DE FIXATION POUR MONTAGE MURAL

(43) Veröffentlichungstag der Anmeldung: 18.03.2015
(73) Patentinhaber: Keramik Holding AG Laufen, CH-4242 Laufen (CH)
(72) Erfinder: BAIER, Bernhard, 79730 Murg (DE)
(74) Vertreter: Braun, André jr.
(86) Internationale Anmeldenummer: PCT/EP2012/058594
(87) Internationale Veröffentlichungsnummer: WO 2013/167186

(56) Entgegenhaltungen:
- EP-A1- 1 338 711
- DE-U1-202009 014 171
- DE-U1-202010 009 280

## Beschreibung

Die vorliegende Erfindung betrifft einen Gegenstand und ein Befestigungssystem zur Wandmontage des Gegenstands an einer im wesentlichen vertikalen Wand, insbesondere zur Befestigung von schweren und ausladenden Gegenständen, wie sanitären Einrichtungen, in freitragender Weise an Gebäudewänden.

Bei der Befestigung schwerer und ausladender Gegenstände an Gebäudewänden ist eine zuverlässige Fixierung entscheidend. Insbesondere beim Gebrauch derartiger Gegenstände als Sitzfläche, Ablagefläche, Abstützeinrichtung und der gleichen muss die Verteilung der wirkenden Kräfte bereits bei der Befestigung berücksichtigt werden. Beispielsweise kommen für Sanitärbecken, Toiletten, Bidets oder Urinale oftmals freitragende, bzw. ausschliesslich hängende Konstruktionen zum Einsatz. Neben einer sicheren Halterung soll eine einfache Montage und zugleich ein ansprechendes Design der Gegenstände möglich sein.

Herkömmliche Befestigungssysteme umfassen hierfür diverse Befestigungs-komponenten, die teilweise am Befestigungsgegenstand und teilweise an der Wand fixiert werden, sowie Verbindungskomponenten zur Verbindung der Befestigungskomponenten mit einander. In der EP 2333169 ist z. B. eine Montage für Sanitäreinrichtungen beschrieben, bei der Befestigungsschrauben senkrecht von einer Wand abstehen und in Befestigungsstreben an der Sanitäreinrichtung eingreifen. Die Befestigungsschrauben werden mit Feststellschrauben an den Befestigungsstreben befestigt. Die Streben bestehen aus zwei Teilstreben, die miteinander verschraubt werden und anschliessend in gegenüberliegende Einbuchtungen an der Sanitäreinrichtung eingeklemmt werden. Hierfür muss die Sanitäreinrichtung geeignete Vertiefungen aufweisen, die parallel zur Wandfläche verlaufen und daher nach der Formgebung der Sanitäreinrichtung in diese eingebracht werden müssen. Die Montage ist daher aufwendig und kompliziert.

Aus der EP 1338711 ist ein Bausatz mit einem an einer Wand aufzuhängenden Objekt und einer Befestigungseinrichtung für dieses Objekt bekannt. Die Befestigungseinrichtung umfasst ein Metallrohr, das auf einen Wandbolzen geschraubt wird, und ein Vormontagegehäuse mit einer Klemmhülse, das vor der Montage des Objekts an diesem angebracht werden muss. Mit einer Spannschraube wird das Metallrohr an der Klemmhülse befestigt, so dass das Objekt gegen die Wand gespannt wird. Das Vormontagegehäuse wird an einer Objektfläche vorgesehen, die an der Wand zu liegen kommt. Hierfür weist das Vormontagegehäuse Haken und Positionierflügel auf. Das Vormontagegehäuse wird von einer Objektinnenseite mit den Haken durch eine Öffnung in der Objektfläche geschoben, bis die Positionierflügel an der Innenfläche anliegen und die Haken in Einkerbungen an der Aussenfläche eingreifen, so dass das Vormontagegehäuse am Objekt gesichert ist. Je nach Ausgestaltung des Objekts müssen hierfür zusätzliche Arbeitsschritte zur Vorbereitung der Objektfläche und zum Einsetzen des Vormontagegehäuse erfolgen, die in der Regel nicht ohne weiteres in Zusammenhang mit der Anbringung des Objekts an der Wand ausgeführt werden können, sondern seitens des Herstellers des Objekts erfolgen.

Es ist eine Aufgabe der vorliegenden Erfindung ein Befestigungssystem zur Wandmontage von Gegenständen zur Verfügung zu stellen, das in einfacher und unkomplizierter Weise angewendet werden kann, das nur geringen Einfluss auf die Ausgestaltung des Gegenstands nimmt, mit wenigen Einzelteilen auskommt und eine zuverlässige Halterung des Gegenstands an der Wand ermöglicht.

Diese Aufgabe wird von der Erfindung durch einen Gegenstand und ein Befestigungssystem nach Anspruch 1 gelöst. Vorteilhafte Ausgestaltungen und weitere Ausführungsbeispiele sind in den abhängigen Ansprüchen beschrieben.

Ein Befestigungssystem zur Wandmontage von Gegenständen nach der Erfindung ist vor allem für schwere Gegenstände geeignet, die an einer im wesentlichen vertikalen Wand anzubringen sind. Dabei kann die Wand auch geringfügig überhängend ausgebildet sein. Das Befestigungssystem ist insbesondere zur Befestigung von ausladenden Gegenständen geeignet, die von Gebäudewänden abstehen und freitragend ohne Abstützung am Boden vorgesehen sind, wie z. B. sanitäre Einrichtungen. Vorteilhaft kann das System auch bei Gegenständen mit aufwendiger Herstellung, wie etwa Keramikgegenständen, eingesetzt werden.

Nach der Erfindung umfasst das Befestigungssystem den Gegenstand und wenigstens ein Gehäuseelement zum Anbringen am Gegenstand, wenigstens einen von einer Wand abstehenden Bolzen und wenigstens einen Sicherungsstift, der das Gehäuseelement am Bolzen sichert. Das Gehäuseelement wird in eine Befestigungsfläche des Gegenstands eingebracht, die der Wand zugewandt ist. Im Wesentlichen kann die Befestigungsfläche parallel zur Wand verlaufen. Das Gehäuseelement weist einen Aufnahmebereich zur Aufnahme des Bolzens auf, der beispielsweise hülsenförmig ausgebildet ist. Ferner kann es einen Befestigungsbereich aufweisen, der sich an den Aufnahmebereich anschliesst oder mit diesem überlappt. Der Befestigungsbereich dient zur Anbringung des Gehäuseelements in der Befestigungsfläche des Gegenstands. Der wenigstens eine Bolzen steht von der Wand in Richtung des Gegenstands ab. Vorteilhaft steht der Bolzen im Wesentlichen senkrecht von der Wand ab. Der Aufnahmebereich des Gehäuseelements weist einen Durchgang auf, durch den der Sicherungsstift in Wirkverbindung mit dem Bolzen steht und diesen im Gehäuseelement sichert.

Nach der Erfindung ist das Gehäuseelement zylindrisch mit wenigstens einem radial abragenden Verriegelungsmittel ausgebildet und die Befestigungsfläche weist wenigstens eine Durchgangsöffnung und einen Verriegelungsanschlag auf. Der Verriegelungsanschlag ist axial in Bezug auf die Längsachse des Gehäuseelements ausgerichtet. Er weist hierfür z. B. eine radial zur Achse verlaufende Fläche oder Kante auf. Das Verriegelungsmittel und der Verriegelungsanschlag bilden gemeinsam einen Drehverriegelungsmechanismus derart, dass das Gehäuseelement in einer Einführposition axial in die Durchgangsöffnung von ausserhalb des Gegenstands einschiebbar ist und in einer Verriegelungsposition relativ zur Einführposition innerhalb der Durchgangsöffnung derart gegenüber dem Gegenstand, bzw. der Durchgangsöffnung, verdreht ist, dass das wenigstens eine Verriegelungsmittel am Verriegelungsanschlag angreift und das Gehäuseelement relativ zum Gegenstand axial blockiert. Dabei blockiert der Verriegelungsanschlag das Gehäuseelement relativ zum Gegenstand zumindest in einer axialen Richtung, die entgegen der Einführrichtung verläuft, in der das Gehäuseelement in die Befestigungsfläche eingeführt wird.

Die Befestigungsfläche kann eine Befestigungswand des Gegenstands sein, so dass die Fläche eine Aussenseite und eine Innenseite aufweist, die am Gegenstand nach aussen bzw. nach innen orientiert sind. Dabei liegt die Aussenseite der Wand gegenüber und ist von aussen zugänglich, während die Innenseite nicht zugänglich sein muss.

Bei dem Befestigungssystem nach der Erfindung kann der Gegenstand ohne jegliche Befestigungselemente ausgeliefert werden. Das Gehäuseelement kann vor Ort z. B. vom Sanitärmonteur am Gegenstand angebracht und an diesem verriegelt werden. Dadurch vereinfacht sich die Herstellung sowohl des Gegenstands als auch der Befestigungselemente des Befestigungssystems.

In einer Ausführungsform des Befestigungssystems nach der Erfindung ist das wenigstens eine Verriegelungsmittel am Ende des Gehäuseelements, das in die Durchgangsöffnung eingeführt wird, vorgesehen. Ferner weist das Gehäuseelement wenigstens einen beabstandet zum Verriegelungsmittel vorgesehenen Axialanschlag auf. Das Verriegelungsmittel ist im Befestigungsbereich des Gehäuseelements angeordnet, während der Axialanschlag im Befestigungsbereich oder im Aufnahmebereich sein kann.

Verriegelungsmittel und Axialanschlag stehen beispielsweise von einer Aussenumfangsfläche des Gehäuseelements zumindest teilweise senkrecht zur Längsachse des Gehäuseelements, d. h. radial, ab. Der Axialanschlag kann elastisch ausgebildet sein, so dass er deformiert oder sich geringfügig aus seiner radial abstehenden Position verbogen werden kann. Er kann beispielsweise als umlaufende Schürze um den Aussenumfang des Gehäuseelements oder auch durch einen oder mehrere abragende Vorsprünge vorgesehen sein. Das Verriegelungsmittel kann z. B. als Bolzen, Stift oder sonstiger Vorsprung ausgebildet sein. Ein Abstand zwischen Verriegelungsmittel und Axialanschlag entspricht im Wesentlichen der Dicke der Befestigungsfläche zwischen Aussenseite und Innenseite.

Das Gehäuseelement wird in der Einführposition soweit durch die Durchgangsöffnung in die Befestigungsfläche eingeführt bis der Axialanschlag gegen die Befestigungsfläche stösst. Hierfür sind der Durchmesser der Durchgangsöffnung und die Länge des Axialanschlags aufeinander abgestimmt. Vorzugsweis ist der Durchmesser des Gehäuseelements nur geringfügig kleiner als der Durchmesser der Durchgangsöffnung, so dass der Axialanschlag und das Verriegelungsmittel nur wenig über den Aussenumfang des Gehäuseelements hervorstehen müssen, um in eine Verriegelungsposition zu gelangen. In der Verriegelungsposition stösst der Axialanschlag an der Aussenseite der Befestigungsfläche an, während das Verriegelungsmittel die Befestigungsfläche an der Innenseite hintergreift. Sobald also das Gehäuseelement von der Einführposition in die Verriegelungsposition verdreht wird, ist das Gehäuseelement in beide axiale Richtungen unbeweglich und wird von dem Verriegelungsmittel und dem Axialanschlag blockiert. Durch die Elastizität des Axialanschlags können Toleranzen in der Dicke der Befestigungsfläche des Gegenstands ausgeglichen werden und der Axialanschlag liegt dicht an der Aussenseite an.

Die Durchgangsöffnung weist wenigstens eine radial verlaufende Ausbuchtung entsprechend des wenigstens einen Verriegelungsmittels auf. In der Einführposition fluchten Ausbuchtungen und Verriegelungsmittel, so dass die Verriegelungsmittel beim Einbringen des Gehäuseelements in die Durchgangsöffnung durch die Ausbuchtungen hindurch gleiten. Nach dem Einführen wird das Gehäuseelement relativ zur Befestigungsfläche verdreht, so dass die Verriegelungsmittel und die Ausbuchtungen in verschiedene radiale Richtungen weisen und die Verriegelungsmittel hinter die Innenseite der Befestigungsfläche greifen und verriegeln. Auf der Oberfläche der Befestigungsfläche sind weder an der Innen- noch an Aussenseite besondere Vorrichtungen wie, z. B. Kerben oder Einschnitte notwendig, um das Gehäuseelement zu fixieren. Dadurch weist der Gegenstand eine einfache Formgebung auf und kann kostengünstig hergestellt werden.

In einer bevorzugten Ausführungsform weist das Befestigungssystem nach der Erfindung zwei Verriegelungsmittel auf, die einander gegenüberliegend von dem Gehäuseelement abragen, und die Durchgangsöffnung weist zwei einander gegenüberliegende Ausbuchtungen auf. Der Durchgang für den Sicherungsstift im Aufnahmebereich des Gehäuseelements kann vorzugsweise um 90° versetzt zu den Verriegelungsmitteln am Gehäuseelement angeordnet sein, so dass sich die beim Festziehen des Sicherungsstifts entstehenden Kräfte, die dabei gegen die Innenfläche drücken, gleichmässig auf die Verriegelungsmittel verteilen.

Die Befestigungsfläche kann die Abschlussfläche des Gegenstands bilden, die in montiertem Zustand an der Wand anliegt. Die Befestigungsfläche kann aber auch beabstandet zur Abschlussfläche liegen und z. B. nach innen versetzt angeordnet sein. Wesentlich ist, dass die Befestigungsfläche der Wand gegenüberliegt, damit das Gehäuseelement den Bolzen, der aus der Wand ragt, aufnehmen kann. In diesem Fall kann vorgesehen werden, dass die Länge des Teils des Gehäuseelements, der aus der Befestigungsfläche in Richtung der Wand ragt, dem Abstand der Befestigungsfläche bis zur Abschlussfläche des Gegenstands entspricht. Somit steht das Gehäuseelement von der Befestigungsfläche bis zur Höhe der Abschlussfläche hervor.

In einer Ausführungsform kann bei dem Befestigungssystem der Aufnahmebereich hülsenartig ausgebildet sein und an einem in Richtung der Wand weisenden Ende einen Eingangsbereich zur Einführung des Bolzens aufweisen, der konisch nach aussen aufgeweitet ist. Dadurch wird das Einführen des Bolzens in das Gehäuseelement erleichtert, da der konische Bereich als Führung dient.

Zur Befestigung des Gegenstands an der Wand sind vorzugsweise zwei Gehäuseelemente im Gegenstand und zwei Bolzen in der Wand vorgesehen. Es können aber auch drei oder mehr Gehäuseelemente und zugeordnete Bolzen verwendet werden. Ist der Gegenstand mit dem Gehäuseelement auf den Bolzen an der Wand aufgeschoben, kommt der Sicherungsstift zwischen Befestigungsfläche und Wand zu liegen. Es ist daher nicht erforderlich einen Durchgang in das Innere des Gegenstands vorzusehen, um den Sicherungsstift betätigen zu können, da auf den Sicherungsstift von der Aussenseite zugegriffen werden kann. Dennoch ist das Befestigungssystem in montiertem Zustand von aussen nicht sichtbar und erlaubt ein modernes Design für den zu befestigenden Gegenstand.

Die Sicherung des Gehäuseelements auf dem Bolzen erfolgt durch den Sicherungsstift, der durch den Durchgang im Gehäuseelement auf den Bolzen wirkt. Der Sicherungsstift kann mittels einer Schraubverbindung am Gehäuseelement angebracht und in den Aufnahmebereich vorgeschraubt werden. Der Bolzen kann in Richtung des Sicherungsstifts eine konische Vertiefung aufweisen, so dass die Stiftspitze an der schrägen Konusfläche beim Vorschieben angreift und den Bolzen weiter in das Innere des Aufnahmebereichs hinein zieht. Dabei wird der Gegenstand mit dem Gehäuseelement gegen die Wand gedrückt, so dass eine sichere und zuverlässige Befestigung erfolgt.

Ferner sichert der Sicherungsstift das Gehäuseelement gegen ein Verdrehen, sobald er in die Vertiefung im Bolzen eingreift, und bildet somit eine Verdrehsicherung für das Gehäuseelement. Das Gehäuseelement wird somit zuverlässig in der Verriegelungsposition gehalten und kann nicht aus dem Gegenstand herausrutschen.

Ein erfindungsgemässes Befestigungssystem ist, wie erwähnt, vor allem für sanitäre Einrichtungen vorteilhaft. Es kann aber sinnvoll beispielsweise auch bei stehenden Schränken zum Einsatz kommen, um diese z. B. an einem Umkippen zu hindern.

Eine bevorzugte Ausführungsform der Erfindung wird im Folgenden anhand der Zeichnung dargestellt, die lediglich zur Erläuterung dient und nicht einschränkend auszulegen ist. In der Zeichnung zeigen:
- Fig. 1: eine schematische Darstellung eines Gegenstands und eines Gehäuseelements eines Befestigungssystems nach der Erfindung,
- Fig. 2: einen teilweisen Längsschnitt eines Befestigungssystems nach der Erfindung und
- Fig. 3: eine schematische Darstellung eines am Gegenstand montierten Befestigungssystems nach der Erfindung.

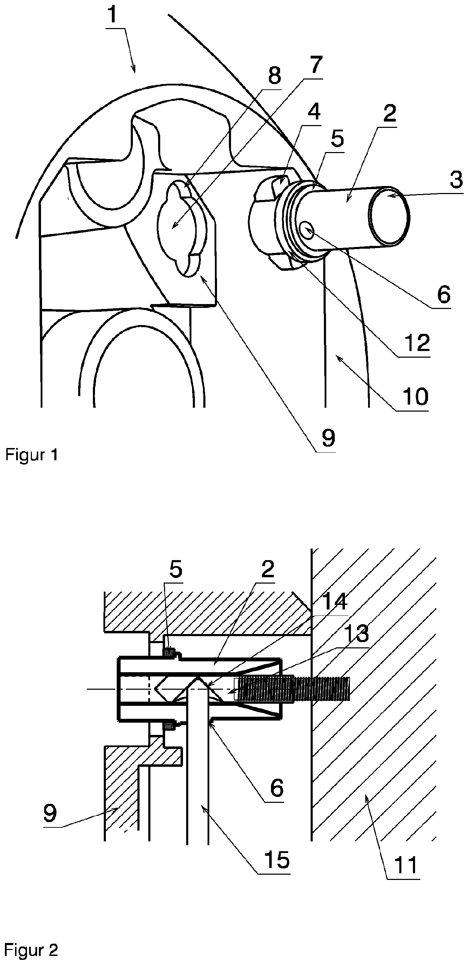

In Figur 1 ist ein Ausschnitt eines Gegenstands 1 in Form eines WCs und eines Gehäuseelements 2 nach der vorliegenden Erfindung gezeigt. Das Gehäuseelement 2 ist zylindrisch ausgebildet und weist einen hülsenförmigen zu einem Ende hin offenen Aufnahmebereich 3 auf. Das Gehäuseelement 2 weist an seinem anderen Ende, das in Richtung des Gegenstands 1 weist, zwei radial abstehende Stifte oder Bolzen 4 als Verriegelungsmittel auf, die in einander gegenüberliegende Richtungen weisen. Weiter weist das Gehäuseelement 2 an seinem Aussenumfang eine umlaufende, im wesentlichen radial abstehende Schürze als Axialanschlag 5 auf. Die Schürze ist leicht elastisch ausgebildet. Im Aufnahmebereich 3 ist im Umfang eine Öffnung 6 vorgesehen, die in das Innere des Aufnahmebereichs führt und ein Innengewinde aufweist. Die Öffnung 6 dient als Durchgang für einen Sicherungsstift 15, wie nachfolgend genauer erläutert wird.

Der Gegenstand 1 weist eine Durchgangsöffnung 7 mit zwei gegenüberliegenden Ausbuchtungen 8 auf. Die Öffnung 7 ist zumindest annähernd rund ausgebildet. Die Ausbuchtungen 8 weisen radial nach aussen und sind derart ausgeformt, dass die Stifte 4 hindurch passen. Die Durchgangsöffnung ist mit der Form eines Schlüssellochs vergleichbar. Die Durchgangsöffnung 7 ist in einer Befestigungsfläche 9 angeordnet, die einer Wand gegenüberliegt, an der der Gegenstand 1 befestigt werden soll. Weiter weist der Gegenstand 1 eine Abschlussfläche 10 auf, die in montiertem Zustand an der Wand zu liegen kommt. Die Befestigungsfläche 9 ist relativ zur Abschlussfläche 10 vertieft, bzw. nach innen versetzt, am Gegenstand 1 vorgesehen. In Figur 1 ist die Aussenseite der Befestigungsfläche 9 sichtbar, wobei die Innenseite nach innen in den Gegenstand 1 weist und nicht sichtbar ist.

In Figur 2 ist der Gegenstand 1 mit dem Befestigungssystem nach der Erfindung in einem an einer Wand 11 montierten Zustand gezeigt. Hierfür wurde das Gehäuseelement 2 in einer Einführposition in die Befestigungsfläche 9 eingebracht. In der Einführposition sind die Stifte 4 als Verriegelungsmittel in einer Richtung mit den Ausbuchtungen 8 der Durchgangsöffnung ausgerichtet, so dass diese durch die Ausbuchtungen 8 hindurch von Aussen zur Innenseite der Befestigungsfläche 9 geführt werden können. Das Gehäuseelement 2 wird soweit in die Befestigungsfläche 9 eingeschoben, bis der Axialanschlag 5 an der Aussenseite gegen den Rand der Durchgangsöffnung 7 schlägt und die Einführbewegung in der Einführrichtung blockiert.

Anschliessend wird das Gehäuseelement 2 relativ zum Gegenstand 1 von der Einführposition in eine Verriegelungsposition verdreht, wobei die Stifte 4 hinter die Befestigungsfläche 9 gedreht werden, so dass sie nicht mehr mit den Ausbuchtungen 8 der Durchgangsöffnung 7 fluchten. Die Stifte 4 greifen somit als Verriegelungsmittel hinter die Befestigungsfläche und liegen an deren Innenseite an, die einen Verriegelungsanschlag für die Stifte 4 bildet. Die Stifte blockieren somit eine Bewegung des Gehäuseelements 2 entgegen der Einführrichtung. Der Abstand des Axialanschlags 5 und der Stifte 4 entspricht im wesentlichen der Dicke der Befestigungsfläche 9. Das Gehäuseelement 2 sitzt nun gesichert leicht beweglich resp. flexibel im Gegenstand 1. Die Verriegelungsmittel in Form der Stifte 4 bilden mit dem Verriegelungsanschlag einen Drehverriegelungs-mechanismus zur Sicherung des Gehäuseelements 2 im Gegenstand 1. An der Umfangsfläche des Gehäuseelements 2 können zwischen Axialanschlag 5 und den Stiften 4 elastische Ausgleichselemente 12 zur Positionierung resp. Führung des Gehäuseelements 2 vorgesehen sein. Die Elemente 12 liegen in eingeführtem Zustand des Gehäuseelements 2 an der Innenumfangsfläche der Durchgangsöffnung 7 an.

Weiter ist in Figur 2 die Wand 11 gezeigt, aus der ein Bolzen 13 in Richtung des Gegenstands 1 ragt. Der Bolzen kann unmittelbar in der Wand befestigt sein oder, z. B. mit einer Schraubverbindung, auf einem in der Wand verankerten Gegenstück befestigt werden. Der Bolzen 13 weist am Aussenumfang eine konische Vertiefung 14 auf und ist in den Aufnahmebereich 3 des Gehäuseelements 2 eingeschoben. Der Aufnahmebereich 3 ist an seinem zum Bolzen 13 hin offenen Ende konisch aufgeweitet, um das Einschieben des Bolzens zu erleichtern. In eingeschobenem Zustand und in der Verdrehposition kommt die konische Vertiefung 14 des Bolzens 13 gegenüber der Öffnung, d. h. dem Durchgang 6 im Gehäuseelement 2 zu liegen. Ein Sicherungsstift 15 wird durch die Öffnung 6 hindurch in die Vertiefung 14 eingeschoben. Im vorderen Bereich weist der Sicherungsstift 15 ein Aussengewinde auf, das mit dem Innengewinde in der Öffnung 6 zusammenwirkt. Beim Einschrauben des Sicherungsstifts 15 kommt die Spitze des Stifts an der Schräge der konischen Vertiefung 14 zu liegen und gleitet an dieser ab. Dabei übt der Sicherungsstift 15 eine Kraft in Richtung der Längsachse des Gehäuseelements 2 aus, so dass der Bolzen 13 in das Gehäuseelement 2 hineingezogen wird und dort gesichert ist. Da das Gehäuseelement 2 in der Verriegelungsposition fest mit dem Gegenstand verbunden ist, wird dessen Abschlussfläche 10 gegen die Wand 13 gezogen, bzw. gepresst, so dass der Gegenstand 1 sicher an der Wand 13 freitragend befestigt ist.

Sobald der Sicherungsstift 15 in die Vertiefung 14 des Bolzens 13 eingreift, ist das Gehäuseelement 2 gegen weiteres Verdrehen innerhalb der Durchgangsöffnung 7 blockiert. Der Sicherungsstift 15 dient somit auch als Verdrehsicherung für das Gehäuseelement 2 relativ zum Gegenstand 2 und sorgt für eine sichere Fixierung des Gehäuseelements in der Durchgangsöffnung 7.

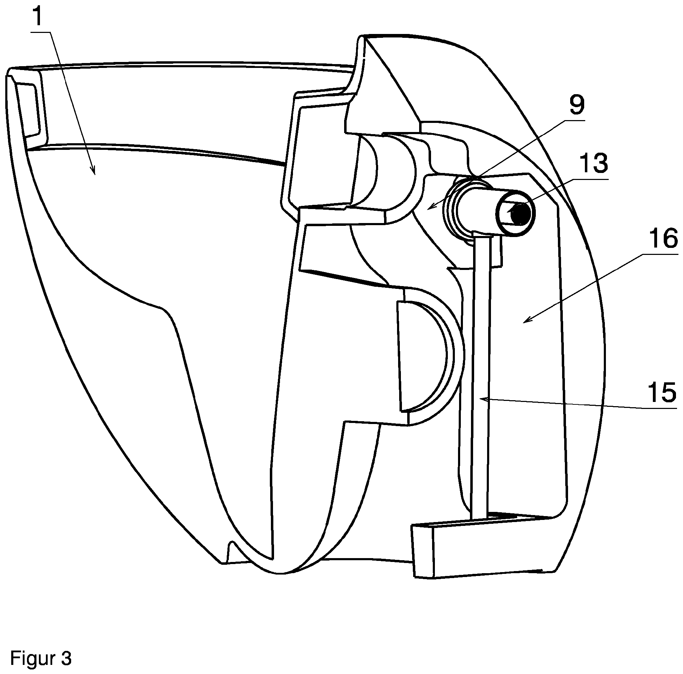

In Figur 3 ist der Gegenstand 1 in Form des WCs in einem Teilschnitt gezeigt. Daraus ist ersichtlich, dass die Befestigungsfläche 9 mit ihrer Aussenseite in Richtung einer Wand (nicht gezeigt) zeigt. Der Sicherungsstift 15 kommt zwischen der Befestigungsfläche 9 und der Wand in einem nach aussen offenen Raum 16 des Gegenstands 2 zu liegen. Der Sicherungsstift 15 ist von einer Unterseite des Gegenstands 2 zugänglich und kann von dort in das Gehäuseelement 2 eingeschraubt werden. Auf Grund der Schnittdarstellung ist in Figur 3 nur eine Einheit aus Gehäuseelement 2 mit Durchgangsöffnung 7, Bolzen 13 und Sicherungsstift 15 gezeigt. Zur Befestigung des Gegenstands 1 werden jedoch vorzugsweise wenigstens zwei solcher Einheiten verwendet.

Für ein erfindungsgemässes Befestigungssystem sind nur einfache bauliche Vorkehrungen am Gegenstand vorzusehen. Es müssen lediglich Durchgangs-öffnungen für die Gehäuseelemente bereit gehalten werden. Diese können in einfacher Weise bei der Formgebung des Gegenstands mit eingebracht werden, ohne dass eine Nachbearbeitung des Gegenstands notwendig ist. Es ist keine Vormontage von Teilelementen des Befestigungssystems erforderlich. Das Gehäuseelement kann vor Ort bei der Montage im Gegenstand verankert werden.

**BEZUGSZEICHENLISTE**

| | | | |
|---|---|---|---|
| 1 | Gegenstand | 9 | Befestigungsfläche |
| 2 | Gehäuseelement | 10 | Abschlussfläche |
| 3 | Aufnahmebereich | 11 | Wand |
| 4 | Verriegelungsmittel | 12 | Ausgleichselement |
| 5 | Axialanschlag | 13 | Bolzen |
| 6 | Öffnung, Durchgang | 14 | konische Vertiefung |
| 7 | Durchgangsöffnung | 15 | Sicherungsstift |
| 8 | Ausbuchtung | 16 | Raum |

## Patentansprüche

1. Gegenstand und Befestigungssystem zur Wandmontage des Gegenstands, wobei der Gegenstand (1) eine Befestigungsfläche (9) mit wenigstens einer Durchgangsöffnung (7)aufweist, das System weiterhin umfassend:
- wenigstens ein zylindrisch ausgebildetes Gehäuseelement (2) mit einem Aufnahmebereich (3) zum Einbringen in die Durchgangsöffnung der einer Wand (11) zugewandten Befestigungsfläche (9),
- wenigstens einen von der Wand (11) abstehenden Bolzen (13), der in dem Aufnahmebereich (3) aufgenommen wird, und
- wenigstens einen Sicherungsstift (15), der durch einen Durchgang (6) im Aufnahmebereich (3) in Wirkverbindung mit dem Bolzen (13) steht und diesen im Gehäuseelement (2) sichert,
**dadurch gekennzeichnet, dass**
das Gehäuseelement (2) mit wenigstens einem radial abragenden Verriegelungsmittel (4) ausgebildet ist und die Befestigungsfläche (9) einen Verriegelungsanschlag aufweist, wobei das Verriegelungsmittel (4) und der Verriegelungsanschlag gemeinsam einen Drehverriegelungsmechanismus derart bilden, dass das Gehäuseelement (2) in einer Einführposition axial in die Durchgangsöffnung (7) von ausserhalb des Gegenstands einschiebbar ist und in einer Verriegelungsposition relativ zur Einführposition innerhalb der Durchgangsöffnung (7) derart gegenüber der Befestigungsfläche (9) des Gegenstands (1) verdreht ist, dass das wenigstens eine Verriegelungsmittel (4) am Verriegelungsanschlag angreift und das Gehäuseelement (2) relativ zum Gegenstand (1) axial blockiert.

2. Gegenstand und Befestigungssystem nach Anspruch 1, **dadurch gekennzeichnet, dass** das wenigstens eine Verriegelungsmittel (4) an einem Ende des Gehäuseelements (2), das in die Durchgangsöffnung einschiebbar ist, vorgesehen ist und das Gehäuseelement (2) wenigstens einen beabstandet zum Verriegelungsmittel (4) vorgesehenen Axialanschlag (5) aufweist.

3. Gegenstand und Befestigungssystem nach Anspruch 2, **dadurch gekennzeichnet, dass** der Axialanschlag (5) in der Verriegelungsposition an einer Aussenseite der Befestigungsfläche (9) anstösst.

4. Gegenstand und Befestigungssystem nach einem der vorhergehenden Ansprüche, **dadurch gekennzeichnet, dass** in der Verriegelungsposition das wenigstens eine Verriegelungsmittel (4) die Befestigungsfläche (9) an der Innenseite hintergreift.

5. Gegenstand und Befestigungssystem nach einem der vorhergehenden Ansprüche 2 bis 4, **dadurch gekennzeichnet, dass** Verriegelungsmittel (4) und Axialanschlag (5) von einer Aussenumfangsfläche des Gehäuseelements (2) zumindest teilweise senkrecht zur Längsachse des Gehäuseelements (2) abstehen.

6. Gegenstand und Befestigungssystem nach einem der vorhergehenden Ansprüche, **dadurch gekennzeichnet, dass** die Durchgangsöffnung (7) wenigstens eine radial verlaufende Ausbuchtung (8) entsprechend des wenigstens einen Verriegelungsmittels (4) aufweist.

7. Gegenstand und Befestigungssystem nach einem der vorhergehenden Ansprüche, **dadurch gekennzeichnet, dass** der Axialanschlag (5) als elastisch ausgebildete Schürze um den Aussenumfang des Gehäuseelements (2) vorgesehen ist.

8. Gegenstand und Befestigungssystem nach einem der vorhergehenden Ansprüche, **dadurch gekennzeichnet, dass** zwei Verriegelungsmittel (4) vorgesehen sind, die einander gegenüberliegend von dem Gehäuseelement (2) abragen, und die Durchgangsöffnung (7) zwei einander gegenüberliegende Ausbuchtungen (8) aufweist.

9. Gegenstand und Befestigungssystem nach einem der vorhergehenden Ansprüche, **dadurch gekennzeichnet, dass** das Verriegelungsmittel (4) als Bolzen ausgebildet ist.

10. Gegenstand und Befestigungssystem nach einem der vorhergehenden Ansprüche, **dadurch gekennzeichnet, dass** ein Abstand zwischen Verriegelungsmittel (4) und Axialanschlag (5) im Wesentlichen einer Dicke der Befestigungsfläche (9) entspricht.

11. Gegenstand und Befestigungssystem nach einem der vorhergehenden Ansprüche, **dadurch gekennzeichnet, dass** der Gegenstand eine Abschlussfläche (10) umfasst, wobei die Länge des Teils des Gehäuseelements (2), der aus der Befestigungsfläche (9) ragt, dem Abstand der Befestigungsfläche (9) bis zu der Abschlussfläche (10) entspricht.

12. Gegenstand und Befestigungssystem nach einem der vorhergehenden Ansprüche, **dadurch gekennzeichnet, dass** der Aufnahmebereich (3) hülsenartig ausgebildet ist und in einem Eingangsbereich zur Einführung des Bolzens (13) konisch nach aussen aufgeweitet ist.

13. Gegenstand und Befestigungssystem nach einem der vorhergehenden Ansprüche, **dadurch gekennzeichnet, dass** der Sicherungsstift (15) zwischen Befestigungsfläche (9) und Wand (11) vorgesehen ist.

14. Gegenstand und Befestigungssystem nach einem der vorhergehenden Ansprüche, **dadurch gekennzeichnet, dass** der Sicherungsstift (15) das Gehäuseelement (2) gegen eine Verdrehen sichert.

## Claims

1. An object and fastening system for wall mounting the object, the object (1) having a fastening surface (9) with at least one passage opening (7), the system further comprising:
- at least one housing element (2) of cylindrical design with a receiving area (3) for insertion into the passage opening of the fastening surface (9) facing the one wall (11),
- at least one bolt (13) protruding from the wall (11) which is received in the receiving area (3), and
- at least one securing pin (15), which is operatively connected to the bolt (13) through a passage (6) in the receiving area (3) and secures said bolt in the housing element (2),
**characterized in that**
the housing element (2) is designed with at least one radially protruding locking means (4) and the fastening surface (9) having a locking stop, wherein the locking means (4) and the locking stop together form a rotary locking mechanism such that the housing element (2) is adapted to be axially pushed into an insertion position in the passage opening (7) from outside the object and, in a locking position relative to the insertion position within the passage opening (7), is rotated in relation to the fastening surface (9) of the object (1), such that the at least one locking means (4) engages the locking stop and axially blocks the housing element (2) relative to the object (1).

2. The object and fastening system according to claim 1, **characterized in that** the at least one locking means (4) is provided at one end of the housing element (2), which is adapted to be inserted into the passage opening and the housing element (2) having at least one axial stop (5) spaced away from the locking means (4).

3. The object and fastening system according to claim 2, **characterized in that** the axial stop (5) abuts, in the locking position, on an outer side of the fastening surface (9).

4. The object and fastening system according to one of the preceding claims, **characterized in that**, in the locking position, the at least one locking means (4) engages the fastening surface (9) from behind on the inside.

5. The object and fastening system according to one of the preceding claims 2 to 4, **characterized in that** locking means (4) and axial stop (5) project from an outer peripheral surface of the housing element (2) at least partially perpendicular to the longitudinal axis of the housing element (2).

6. The object and fastening system according to one of the preceding claims, **characterized in that** the passage opening (7) has at least one radially extending bulge (8) corresponding to the at least one locking means (4).

7. The object and fastening system according to one of the preceding claims, **characterized in that** the axial stop (5) is provided as an elastic valance around the outer circumference of the housing element (2).

8. The object and fastening system according to one of the preceding claims, **characterized in that** two locking means (4) are provided, which protrude opposite one another from the housing element (2), and the passage opening (7) has two opposite bulges (8).

9. The object and fastening system according to one of the preceding claims, **characterized in that** the locking means (4) is designed as a bolt.

10. The object and fastening system according to one of the preceding claims, **characterized in that** a distance between the locking means (4) and the axial stop (5) substantially corresponds to a thickness of the fastening surface (9).

11. The object and fastening system according to one of the preceding claims, **characterized in that** the object comprises an end surface (10), wherein the length of the part of the housing element (2) which protrudes from the fastening surface (9), corresponds to the distance of the fastening surface (9) up to the end surface (10).

12. The object and fastening system according to one of the preceding claims, **characterized in that** the receiving area (3) is sleeve-like and is flared outwardly in an input area for the introduction of the bolt (13).

13. The object and fastening system according to one of the preceding claims, **characterized in that** the securing pin (15) is provided between the fastening surface (9) and the wall (11).

14. The object and fastening system according to one of the preceding claims, **characterized in that** the securing pin (15) secures the housing element (2) against rotation.

## Revendications

1. Objet et système de fixation pour le montage mural de l'objet, selon lesquels l'objet (1) présente une surface de fixation (9) avec au moins une ouverture de passage (7), le système comprenant en outre :
- au moins un élément de boîtier cylindrique (2) avec une zone de réception (3) pour une insertion dans l'ouverture de passage de la surface de fixation (9) tournée vers un mur (11),
- au moins un boulon (13) faisant saillie du mur (11), lequel est reçu dans la zone de réception (3), et
- au moins une goupille de sécurité (15) qui est reliée fonctionnellement au boulon (13) par un passage (6) dans la zone de réception (3) et fixe ledit boulon dans l'élément de boîtier (2),
**caractérisés en ce que**
l'élément de boîtier (2) est réalisé avec au moins un moyen de verrouillage (4) faisant saillie radialement et **en ce que** la surface de fixation (9) présente une butée de verrouillage, selon lesquels le moyen de verrouillage (4) et la butée de verrouillage forment ensemble un mécanisme de verrouillage rotatif, de sorte que l'élément de boîtier (2) peut être inséré axialement dans une position d'insertion dans l'ouverture de passage (7) depuis l'extérieur de l'objet et dans une position de verrouillage par rapport à la position d'insertion à l'intérieur de l'ouverture de passage (7), est tourné par rapport à la surface de fixation (9) de l'objet (1) de telle sorte que l'au moins un moyen de verrouillage (4) vient en prise avec la butée de verrouillage et que l'élément de boîtier (2) se bloque axialement par rapport à l'objet (1).

2. Objet et système de fixation selon la revendication 1, **caractérisés en ce que** l'au moins un moyen de verrouillage (4) est prévu à une extrémité de l'élément de boîtier (2), laquelle extrémité peut être insérée dans l'ouverture de passage, et **en ce que** l'élément de boîtier (2) présente au moins une butée axiale (5) espacée du moyen de verrouillage (4).

3. Objet et système de fixation selon la revendication 2, **caractérisés en ce que**, en position de verrouillage, la butée axiale (5) vient en butée contre une face extérieure de la surface de fixation (9).

4. Objet et système de fixation selon l'une des revendications précédentes, **caractérisés en ce que**, en position de verrouillage, l'au moins un moyen de verrouillage (4) s'engage derrière la surface de fixation (9) au niveau de la face intérieure.

5. Objet et système de fixation selon l'une des revendications précédentes 2 à 4, **caractérisés en ce que** le moyen de verrouillage (4) et la butée axiale (5) font saillie d'une surface périphérique extérieure de l'élément de boîtier (2) au moins partiellement perpendiculaire à l'axe longitudinal de l'élément de boîtier (2).

6. Objet et système de fixation selon l'une des revendications précédentes, **caractérisés en ce que** l'ouverture de passage (7) présente au moins une protubérance (8) s'étendant radialement correspondant à l'au moins un moyen de verrouillage (4).

7. Objet et système de fixation selon l'une des revendications précédentes, **caractérisés en ce que** la butée axiale (5) est prévue sous forme de collerette élastique autour de la périphérie extérieure de l'élément de boîtier (2).

8. Objet et système de fixation selon l'une des revendications précédentes, **caractérisés en ce que** deux moyens de verrouillage (4) sont prévus, lesquels font saillie en regard de l'élément de boîtier (2), et **en ce que** l'ouverture de passage (7) présente deux protubérances (8) opposées.

9. Objet et système de fixation selon l'une des revendications précédentes, **caractérisés en ce que** le moyen de verrouillage (4) est réalisé sous forme de boulon.

10. Objet et système de fixation selon l'une des revendications précédentes, **caractérisés en ce qu'**une distance entre le moyen de verrouillage (4) et la butée axiale (5) correspond sensiblement à une épaisseur de la surface de fixation (9).

11. Objet et système de fixation selon l'une des revendications précédentes, **caractérisés en ce que** l'objet comprend une surface d'extrémité (10), selon lesquels la longueur de la partie de l'élément de boîtier (2) qui fait saillie de la surface de fixation (9) correspond à la distance allant de la surface de fixation (9) jusqu'à la surface d'extrémité (10).

12. Objet et système de fixation selon l'une des revendications précédentes, **caractérisés en ce que** la zone de réception (3) est réalisée en forme de manchon et est élargie coniquement vers l'extérieur dans une zone d'entrée pour l'insertion du boulon (13).

13. Objet et système de fixation selon l'une des revendications précédentes, **caractérisés en ce que** la goupille de sécurité (15) est prévue entre la surface de fixation (9) et le mur (11).

14. Objet et système de fixation selon l'une des revendications précédentes, **caractérisés en ce que** la goupille de sécurité (15) empêche la rotation de l'élément de boîtier (2).
